# EUROPEAN PATENT APPLICATION

(11) **EP 3 564 017 A1**
(43) Date of publication of application: **06.11.2019**
(21) Application number: 18170625.0
(22) Date of filing: 03.05.2018
(51) Int. Cl.: B29C 70/52, B29D 99/00, F03D 1/06

(54) **PULTRUSION TOOL, APPARATUS AND METHOD**

(71) Applicant: Siemens Gamesa Renewable Energy A/S, 7330 Brande (DK)
(72) Inventor: Pedersen, David Stien, 9000 Aalborg (DK)
(74) Representative: Aspacher, Karl-Georg

(57) **Abstract**

A pultrusion tool (10a, 10b, 10c, 10d, 10e, 10f) for a pultrusion apparatus (100), the pultrusion tool (10) longitudinally extending along a pultrusion direction (X) and comprising a plurality of sections (11a, 11b, 11c, 11d, 11e, 11f; 12a, 12b 12c, 12d, 12e, 12f) transversal to the pultrusion direction (X), the plurality of sections (11a, 11b, 11c, 11d, 11e; 11f, 12a, 12b 12c, 12d, 12e, 12f) having all the same cross area (A) within a predefined margin of error. At least two sections (11a, 11b, 11c, 11d, 11e, 11f; 12a, 12b 12c, 12d, 12e, 12f) of the plurality of sections differ from each other for shape and/or orientation about the pultrusion direction (X).

## Description

### Field of invention

The present invention relates to a pultrusion tool for manufacturing an elongated structure in a pultrusion apparatus. The present invention further relates to a method for manufacturing a pultruded strip for an elongate structure.

### Art Background

Pultrusion is widely known as a continuous process for manufacturing composite materials including a plurality of fibers, for example carbon fibers, and a matrix, for example a resin. Pultrusion is known for manufacturing elongated structures having a constant cross-section.

In subsequent manufacturing steps, such elongated structures having a constant cross-section may be bended to create products having a curved shaped, for example blades of wind turbines. The bending may be performed under vacuum against a mold and a plurality of elongated structures may be casted together with pre-tension to form the final product.

The pre-tension can be release by performing a curing procedure.

The above described procedure presents a plurality of inconveniences, which may be removed at least partially. In particular, it is desirable to provide a pultrusion tool and method for providing:
- better structure property in the pultruded structure and in the final product with the same amount of materials with respect to the prior art,
- reducing of waste material and machining time.

### Summary of the Invention

This need may be met by the subject matter according to the appended independent claims. Advantageous embodiments of the present invention are described by the dependent claims.

According to a first aspect of the invention, a pultrusion tool for a pultrusion apparatus is provided. The pultrusion tool longitudinally extends along a pultrusion direction and comprises a plurality of sections transversal to the pultrusion direction, the plurality of sections having all the same cross area within a predefined margin of error, wherein at least two sections of the plurality of sections differ from each other for shape and/or orientation about the pultrusion direction.
With the term "transversal" it is meant orthogonal or inclined with respect to the pultrusion direction of an angle greater than zero.
According to a second aspect of the invention, a pultrusion apparatus is provided, which comprises the above described pultrusion tool.
According to a third aspect of the invention a method for manufacturing a pultruded strip for an elongate structure is provided. The method includes the steps of:
- providing at least a first pultrusion tool as above defined,
- providing a pultrusion die through which a plurality of fibers (are pulled to be soaked in a resin,
- clamming the pultrusion tool around the plurality of resin-soaked fibers for delivering an at least partially formed pultruded strip having a curved shape.
The obtained elongated structure may be advantageously integrated in a wind turbine, in particular in the blade of a wind turbine.
The tool, apparatus and method of the present invention advantageously solves the inconveniences of the prior art, by for providing:
- better structure property in the pultruded structure and in the final product with the same amount of materials with respect to the prior art, because a curved structure is directly provided at the end of the pultrusion process
- reducing of waste material and machining time, because no further processing of an elongated structure with constant cross section is necessary.
When the elongated structure is part of a blade for a wind turbine, it is for example advantageously possible to make the profiles wider in the end pointing to the root end, in such a way that forces can be widen out to have a smoother transition to the root end.

In particular, according to embodiments of the present invention, the pultrusion tool comprises with respect to the pultrusion direction an upstream first section and a downstream final section the first section and the final section differing from each other for shape and/or orientation about the pultrusion direction. Such difference between the first and final cross-section of the pultrusion tool permits to efficiently control the shape of the elongated structure.

According to embodiments of the present invention, the shape and/or orientation about the pultrusion direction of the plurality of sections may vary continuously along the pultrusion direction.

In embodiment of the present invention, the pultrusion tool comprises heating means for curing the at least partially formed pultruded strip.
Further, the pultrusion tool may comprise a pulling mechanism for pulling the at least partially formed pultruded strip and/or the resin-soaked fibers along the pultrusion direction.

In embodiment of the apparatus or of the method according to the present invention, upstream the first pultrusion tool at least a second pultrusion tool is clammed around the plurality of resin-soaked fibers.
Two or more pultrusion tools increase the possibility of controlling the shape of the elongated structure according to the desired design.
The final section of the at least second pultrusion tool has the same shape and orientation about the pultrusion direction of the first section of the pultrusion tool immediately downstream the at least second pultrusion tool. This permits to avoiding discontinuities in the elongated structure in the passage between the pultrusion tool and the one immediately following downstream.

It has to be noted that embodiments of the invention have been described with reference to different subject matters. In particular, some embodiments have been described with reference to apparatus (pultrusion tool and apparatus) type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

- Figure 1: shows a schematic layout of a first embodiment of a pultrusion apparatus according to the present invention, where two pultrusion tools according to the present invention are used.
- Figure 2: shows a schematic layout of a second embodiment of a pultrusion apparatus according to the present invention, where five pultrusion tools according to the present invention are used.
- Figure 3: shows a schematic section of a wind turbine including a stator for a wind turbine according to the present invention.

### Detailed Description

The illustrations in the drawings are schematic. It is noted that in different figures, similar or identical elements are provided with the same reference signs.

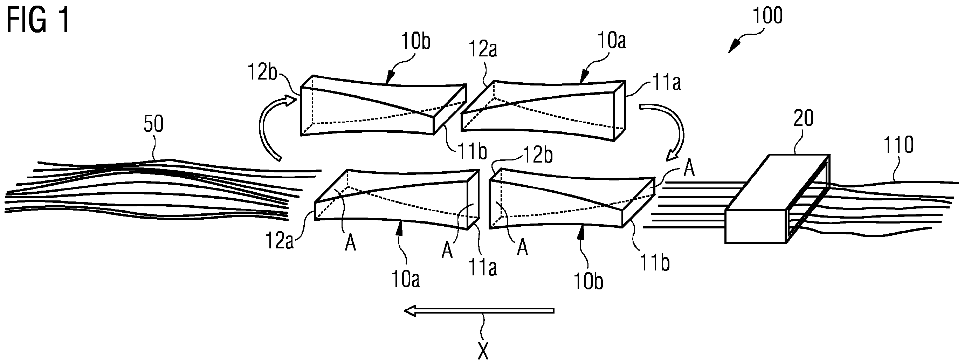

**Figure 1** shows a pultrusion apparatus 100 extending along a longitudinal pultrusion direction X. The pultrusion apparatus 100 comprises a pultrusion die 20 through which a plurality of fibers 110 are pulled to be soaked in a resin.
The pultrusion die 20 has a rectangular cross-section.
The pultrusion die 20 is conventional and already known in the pultrusion technical field and therefore not described in further detail.
With reference to the pultrusion direction X, downstream the pultrusion die 20 two pultrusion tools 10a, 10b are clammed in series to the resin-soaked fibers 110 exiting the pultrusion die 20.
According to possible embodiments of the present invention, only one pultrusion tool may be used.
According to a possible embodiment of the present invention, the two pultrusion tools 10a, 10b may be integrated into one single pultrusion tool.
The pultrusion tools 10a, 10b of the present invention longitudinally extend along a pultrusion direction X and comprise a plurality of sections orthogonal to the pultrusion direction X. The plurality of sections has all the same cross area A within a predefined margin of error, to allow the continuity of the flow of resin-soaked fibers 110 along the pultrusion direction X. In particular, the predefined margin of error of the cross area A is a percentage of a nominal cross area A comprised between 2% and 5%.
In each of the pultrusion tools of the present invention at least two sections of the plurality of cross-sections differ from each other for shape and/or orientation about the pultrusion direction X.
The first pultrusion tool 10a of the embodiment comprises with respect to the pultrusion direction X an upstream first cross-section 11a and a downstream final section 12a. Both first and final cross-sections 11a, 12a are rectangular in shape. The first cross-section 11a has a main dimension which is orthogonal to the main dimension of the cross-section of the pultrusion die 20. The final cross-section 12a has a main dimension which is rotated of 90 degrees about the pultrusion direction X with respect to the first cross-section 11a.
The shape and orientation about the pultrusion direction X of the plurality of cross-sections of the pultrusion tool 10a vary continuously along the pultrusion direction X, between the first cross-section 11a and the final cross-section 12a.
According to the pultrusion method of the present invention the first pultrusion tool 10a is clammed around the plurality of resin-soaked fibers 110 immediately downstream the pultrusion die 20. The first pultrusion tool 10a modifies the flat shape of the resin-soaked fibers 110 exiting the pultrusion die 20. The first pultrusion tool 10a is pulled together with the resin-soaked fibers 110 from the pultrusion die 20 along the pultrusion direction X. In the first pultrusion tool 10a the resin-soaked fibers 110 are deformed and hardened to form an at least formed pultruded strip 50, which is delivered by the apparatus 100, downstream the first pultrusion tool 10a.
Optionally, the pultrusion tool 10a may comprise heating means for curing the resin-soaked fibers 110 and the at least partially formed pultruded strip 50.

The pulling of the resin-soaked fibers 110 and of the first pultrusion tool 10a is performed through a pulling mechanism, which is not shown in the figures and which conventional and already known in the pultrusion technical field.
Further optionally, the pultrusion tool 10a may also comprise a pulling mechanism for pulling the at least partially formed pultruded strip 50 and/or the resin-soaked fibers 110 along the pultrusion direction X.
When the pulling of the resin-soaked fibers 110 and of the first pultrusion tool 10a has created enough space between the first pultrusion tool 10a and the pultrusion die 20 a second pultrusion tool 10b is clammed around the plurality of resin-soaked fibers 110.
The second pultrusion tool 10b of the embodiment comprises with respect to the pultrusion direction X an upstream first cross-section 11b and a downstream final section 12b. Both first and final cross-sections 11b, 12b are rectangular in shape. The first cross-section 11b has a main dimension which is parallel to the main dimension of the cross-section of the pultrusion die 20. The final cross-section 12b has a main dimension which is rotated of 90 degrees about the pultrusion direction X with respect to the first cross-section 11b.
The final cross-section 12b of the second pultrusion tool 10b has the same shape and orientation about the pultrusion direction X of the first section 11a of the first pultrusion tool 10a, so that discontinuities in the elongated structure in the portion of the pultruded strip 50 between the first pultrusion tool 10a and the second pultrusion tool 10b are avoided.
The shape and orientation about the pultrusion direction X of the plurality of cross-sections of the pultrusion tool 10b vary continuously along the pultrusion direction X, between the first cross-section 11b and the final cross-section 12b. When the pulling of the resin-soaked fibers 110 and of the first pultrusion tools 10a, 10b has reached a predefined position, the first pultrusion tool 10a is released from the pultruded strip 50, which is then considered finished and cut to the final desired dimension.

The first pultrusion tool 10a may be again used and clammed to the resin-soaked fibers 110 between the second pultrusion tool 10b, still clammed to the resin-soaked fibers 110, and the pultrusion die 20.

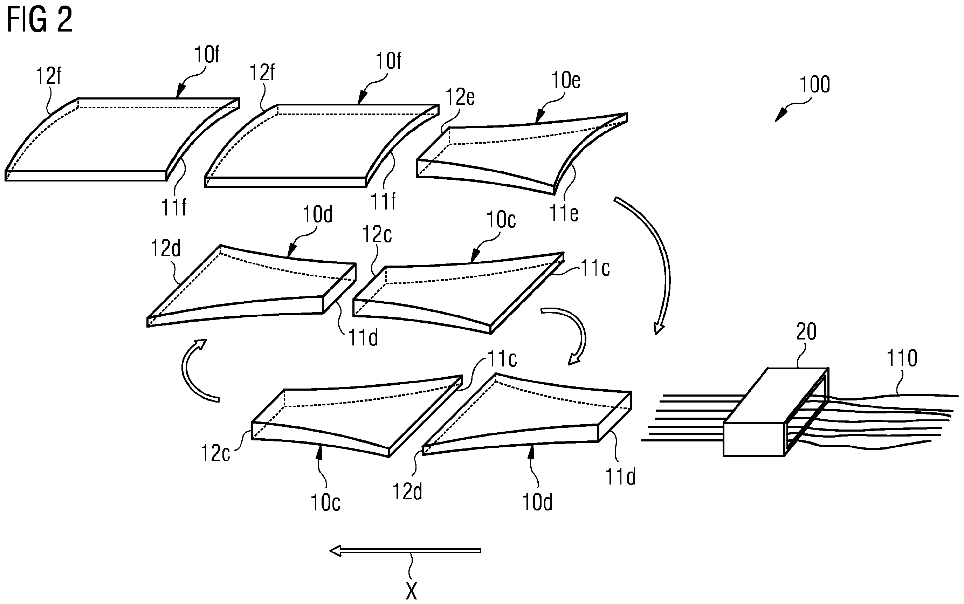

**Figure 2** shows another embodiment of the pultrusion apparatus 100, where, two other pultrusion tools 10c, 10d are clammed in series to the resin-soaked fibers 110 exiting the pultrusion die 20.
Differently from the previously described first embodiment, all the sections 11c, 11d, 12c, 12d of both the first pultrusion tool 10c and of the secondo pultrusion tool 10d have a main dimension, which is parallel to the main dimension of the cross-section of the pultrusion die 20, i.e. the pultrusion tools 10c, 10d have a flat shape.
The pultrusion tools 10c, 10d can be alternated, each being clammed between the other and the pultrusion die 20 while the resin-soaked fibers 110 is pulled in the pultrusion apparatus 100 along the pultrusion direction X.
Alternatively, a third pultrusion tools 10e may be inserted upstream the second pultrusion tool 10d. The final downstream cross-section 12e of the third pultrusion tool 10e has the same shape and orientation about the pultrusion direction X of the first upstream cross-section 11d of the second pultrusion tool 10d, so that, also in this case, discontinuities in the elongated structure in the portion of the pultruded strip 50 between the second pultrusion tool 10d and the third pultrusion tool 10e are avoided. The first upstream cross-section 11e of the third pultrusion tool 10e has a curved shape. Two further pultrusion tools 10f may be inserted upstream the third pultrusion tool 10e. The sections 11f, 12f of both the further pultrusion tools 10f is constant and identical to the first upstream cross-section 11e of the third pultrusion tool 10e.
According to other embodiments of the present invention, any other combination of pultrusion tools according to the present invention may be used in the pultrusion apparatus 100.

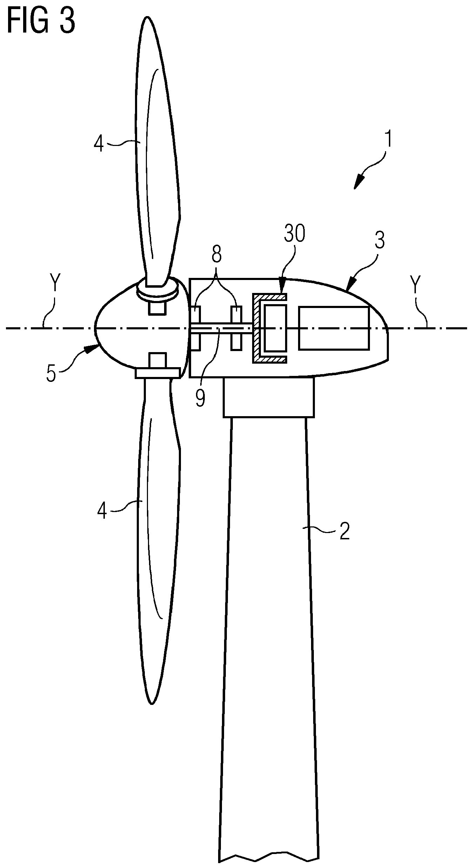

**Figure 3** shows a wind turbine 1 according to the invention. The wind turbine 1 comprises a tower 2, which is mounted on a non-depicted fundament. A nacelle 3 is arranged on top of the tower 2.
The wind turbine 1 further comprises a wind rotor 5 having two, three or more blades 4 (in the perspective of Figure 1 only two blades 4 are visible). The wind rotor 5 is rotatable around a rotational axis Y. The blades 4 extend radially with respect to the rotational axis Y.
The wind rotor 5 is rotationally coupled with an electric generator 30 by means of a rotatable main shaft 9.
According to other possible embodiments of the present invention (not represented in the attached figures), the wind rotor 5 is rotationally coupled directly with the electric generator 30 (direct-drive generator configuration).
A schematically depicted bearing assembly 8 is provided in order to hold in place the rotor 5. The rotatable main shaft 9 extends along the rotational axis Y.
The blades 4 comprise one or more elongated structure 50 obtained through the present invention.

## Claims

1. Pultrusion tool (10a, 10b, 10c, 10d, 10e, 10f) for a pultrusion apparatus (100), the pultrusion tool (10a, 10b, 10c, 10d, 10e, 10f) longitudinally extending along a pultrusion direction (X) and comprising a plurality of sections (11a, 11b, 11c, 11d, 11e, 11f; 12a, 12b 12c, 12d, 12e, 12f) transversal to the pultrusion direction (X), the plurality of sections (11a, 11b, 11c, 11d, 11e; 11f, 12a, 12b 12c, 12d, 12e, 12f) having all the same cross area (A) within a predefined margin of error, wherein at least two sections (11a, 11b, 11c, 11d, 11e, 11f; 12a, 12b 12c, 12d, 12e, 12f) of the plurality of sections differ from each other for shape and/or orientation about the pultrusion direction (X).

2. Pultrusion tool (10a, 10b, 10c, 10d, 10e, 10f) as claimed in claim 1, wherein the pultrusion tool (10a, 10b, 10c, 10d, 10e, 10f) comprises with respect to the pultrusion direction (X) an upstream first section (11a, 11b, 11c, 11d, 11e, 11f) and a downstream final section (12a, 12b 12c, 12d, 12e, 12f), the first section (11a, 11b, 11c, 11d, 11e, 11f) and the final section (12a, 12b 12c, 12d, 12e, 12f) differing from each other for shape and/or orientation about the pultrusion direction (X).

3. Pultrusion tool (10a, 10b, 10c, 10d, 10e, 10f) as claimed in claim 1 or 2, wherein the predefined margin of error of the cross area (A) of the plurality of sections (11a, 11b, 11c, 11d, 11e, 11f; 12a, 12b 12c, 12d, 12e, 12f) is a percentage of a nominal cross area (A), said percentage being comprised between 2% and 5%.

4. Pultrusion tool (10a, 10b, 10c, 10d, 10e, 10f) as claimed in any of the preceding claims, wherein the pultrusion tool (10a, 10b, 10c, 10d, 10e, 10f) comprises heating means for curing the at least partially formed pultruded strip (50).

5. Pultrusion tool (10a, 10b, 10c, 10d, 10e, 10f) as claimed in any of the preceding claims, wherein the pultrusion tool (10a, 10b, 10c, 10d, 10e, 10f) comprises a pulling mechanism for pulling the at least partially formed pultruded strip (50) and/or the resin-soaked fibers (110) along the pultrusion direction (X).

6. Pultrusion tool (10a, 10b, 10c, 10d, 10e, 10f) as claimed in any of the preceding claims, wherein the shape and/or orientation about the pultrusion direction (X) of the plurality of sections vary continuously along the pultrusion direction (X).

7. Pultrusion apparatus (100) for manufacturing a pultruded strip (50) for an elongate structure, the apparatus (100) comprising at least one pultrusion tool (10a, 10b, 10c, 10d, 10e, 10f) according to any of the preceding claims.

8. Method for manufacturing a pultruded strip (50) for an elongate structure, the method including the steps of:
providing at least a first pultrusion tool (10a, 10b, 10c, 10d, 10e, 10f) according to any of the claims 1 to 6,
providing a pultrusion die (20) through which a plurality of fibers (110) are pulled to be soaked in a resin,
clamming the pultrusion tool (10a, 10b, 10c, 10d, 10e, 10f) around the plurality of resin-soaked fibers (110) for delivering an at least partially formed pultruded strip (50) having a curved shape.

9. Method as claimed in claim 8, wherein upstream the first pultrusion tool (10a, 10c) at least a second pultrusion tool (10b, 10d, 10e, 10f) according to any of the claims 1 to 6 is clammed around the plurality of resin-soaked fibers (110).

10. Method as claimed in claim 9, wherein the final section (12b, 12d, 12e, 12f) of the at least second pultrusion tool (10b, 10d, 10e, 10f) has the same shape and orientation about the pultrusion direction (X) of the first section (11a, 11c, 11d, 11e) of the pultrusion tool (10a, 10c, 10d, 10e) immediately downstream the at least second pultrusion tool (10b, 10d, 10e, 10f).

11. Method as claimed in any of the claims 8 to 10, wherein the elongate structure is a portion of a wind turbine blade (4) .
